Europäisches Patentamt

European Patent Office

Office européen des brevets

(19)

(11) Publication number: **0 439 893 A2**

# EUROPEAN PATENT APPLICATION

(12)

(21) Application number: **90305572.1**

(22) Date of filing: **22.05.90**

(51) Int. Cl.5: **G01P 13/00**

(30) Priority: **26.12.89 IL 92884**

(43) Date of publication of application:
**07.08.91 Bulletin 91/32**

(84) Designated Contracting States:
**AT BE CH DE DK ES FR GB GR IT LI LU NL SE**

(71) Applicant: **UNITED MEDICAL SYSTEMS ISRAEL LTD.**
**P.O. Box 9697**
**Haifa 31096(IL)**

(72) Inventor: **Bartoov, Benyamin**
**2, Efron St. Rappaport Building**
**Haifa 31096(IL)**
Inventor: **Mayevsky, Abraham**
**2, Efron St. Rappaport Building**
**Haifa 31096(IL)**
Inventor: **Shneider, Mordechai**
**2, Efron St. Rappaport Building**
**Haifa 31096(IL)**

(74) Representative: **Clifford, Frederick Alan et al**
**MARKS & CLERK 57/60 Lincoln's Inn Fields**
**London WC2A 3LS(GB)**

(54) **Method and apparatus for measuring the motility of sperm cells.**

(57) The invention relates to a method and apparatus for determining the index characterizing the sperm motility of individual sperm cells. According to the invention, the optical density distur- bances caused by said cells is detected by an optical fiber having a thickness in the range of 10 to 400 microns and preferably in the range of 50 to 150 microns. The method is particularly suitable for determining the sperm motility index of human sperm cells, as well as sperm cells of domestic animals after their dilution or thawing. A particular commercial useful application is in the classification of semen quality and artificial inseminina- tion. The method is characterized by its objectivity, simplicity and nevertheless by its sensitivity and accuracy which cmpete very favourably with other known methods and devices.

EP 0 439 893 A2

# METHOD AND APPARATUS FOR MEASURING THE MOTILITY OF SPERM CELLS

The present invention relates to a method and apparatus for determining sperm quality. More particularly, the invention relates to a method and apparatus for measuring sperm motility parameters of human and domestic animals.

## BACKGROUND OF THE INVENTION

It is well known that the characterization of the motion of particles suspended in a liquid medium, is of particular significance in fertility analysis.There are several established techniques and apparatus for measuring the Sperm Motility Index (SMI). The SMI values were found to correlate closely with motile and total cell concentration of the tested sperm preparation. Consequently, the devices designed for such measurements were adapted for commercial applications in insemination centres world-wide.

Sperm motility parameters can be estimated by visual examination of a drop of semen on a slide. However, the results of such visual examination are subjective and may vary widely often in the order of 50% from one observer to another. This method is also tedious and time-consuming.

Some improvements to the visual examination, concerning the principle and apparatus to be used for the assessments of SMI values of fresh domestic animal semen, are described by A. Mayevsky et al. (Int. J. Androl 3: 436; 1980).

A further improvement was later developed using a microscope attached to a computer or video recorder, and a drop of semen in a special cell was analyzed therewith. One of the most serious drawbacks of this approach is that it requires dilution of the specimen to enable distinguishing individual sperm cells. Accordingly, the results obtained are not always accurate since the precise mechanism of the dilution effect is not always known.

According to U.S Patent No. 4,176,953, a method is described for the measurement of the collective wave-like movements of batches of cells which have been found to provide "a fairly accurate indication of sperm motility" (Col 2, lines 19-23). As realized, this method can not be considered to be feasible for the measurement of sperm motility, of human beings. The method consists in determining the variations in optical density caused by the collective wave-like motion of the spermatozoa in the measured sample, generating an amplitude-modulated analog electrical signal corresponding to the variations of the optical density and counting the peaks and valleys of said amplitude-modulated analog signal, thus providing an index of sperm motility. Although the method is quite simple, it was found to be inadequate for diluted semen samples. It should be considered that the motility of spermatozoa in fresh domestic animal semen is characterized by a collective wave-like movement, due to the high cell density. However, in diluted animal semen (used generally for artificial insemination) or in native human semen, the relatively low cell density abolishes the collective movement. Spermatozoa in such semen samples swim in an independent manner. Therefore, as a consequence of the absence of collective movement in human or diluted animal semen samples, the apparatus used for the measurement of SMI values in high density animal semen, will not be adequate for the measurement of semen samples containing motile cell concentration below 400 x 10$^6$ cell/ml.

According to a very recent patent (European 0256067) a process and apparatus are described for characterizing the motion of sperm in flowing fluids.The process requires a prior dilution of a sperm sample, into a special holder inserting the holder into a motility scanner provided with an optical system, radiation sensing a signal processing and display means to analyze the characterised motion of the specimen. The optical system comprises a collimating lens, a condensing lens and an imaging lens. The method, although being quite interesting, is specific for highly concentrated sperm which have to be diluted.

The above brief review illustrates the interest in the problem of fertilizing capacity or sperm and some approaches which were suggested for determining the sperm motility parameters.

It is an object of the present invention to provide a method and apparatus for determining the index characterizing the sperm motility of the measured specimens containing diluted cell concentration where wave-like collective motility is absent such as human samples, or animal. samples diluted or frozen/thawed. It is another object of the present invention to provide a simple method and apparatus for determining the motility of spermatozoa which is indicative of the fertilizing capacity of sperm cells.

## BRIEF DESCRIPTION OF THE INVENTION

The invention relates to a method of measuring the motility of individual sperm cells which comprises:

introducing the sperm cells into a transparent capillary, detecting the optical density disturbances caused by the individual sperm cells, being characterized by the use of an optical fiber having a thickness in the range of 10 to 400 microns for said detection, generating an amplitude-modulated analog electrical signal and counting the peaks and valleys of said electrical signal, thus providing a sperm motility index (SMI).

The SMI values determined by the method of the present invention are very accurate and thus the method provides a reliable estimate of the intensity of motility.The small dimensions of the optical fiber enable a very high sensitivity in determining any optical disturbances imparted by the individual sperm cells. In contrast to the method described in said U.S. Patent No. 4,176,953 wherein a collective wave-like motion of sperm cells are determined, the method according to the present invention is very sensitive being capable of measuring the SMI at the level of individual spermatozoa. The method is particularly suitable for determining the SMI for human sperm cells characterized by their relative low concentration as well as sperm cells of domestic animals such as bulls, rams, horses, turkeys, after their dilution and/or after thawing frozen sperm cells. The method is most useful in clinical situations and for motility evaluation of diluted animal semen in commercial applications such as artificial insemination. The method and apparatus are also applicable for semen cells after the so-called "swim-up" procedure. As known, this procedure is useful for an enrichment of motile cells and is described in the literature (see for example Belanos, J.K.,Overstreet, J.W. Katz, D.F., Fertil.Steril. 39, 536, 1983)

The method can also be useful for the measurement of the longevity of male semen, indicating whether a normal or pathological semen exists.It can also give a diagnosis of deficient motility which might be the cause of sterility in human male.

According to another embodiment of the present invention, which is also based on the sperm motility, the method and device are useful for the evaluation of penetrating capability of semen into cervical mucus. The assay, which is called "Sperm-Cervical Mucus Penetration Assay",is routinely performed by inserting cervical mucus into a thin capillary and exposing the filled capillary to semen sample. Both the mucus and/or semen qualities can be evaluated in this assay. The results of the test are performed by microscopic evaluation of the number and location of sperm cells in the capillary after a given period of time at 37° C. The device was shown to be able to perform an identical task in an automatic and objective manner, saving manual labor, while increasing assay reliability and, consequently, clinical relevancy.

The assay can be performed using the bovine cervical mucus, which was shown to reliably represent human mucus. In this mode, male factor can be assessed without being confounded by female variables. Alternatively, the compatibility of the husband's semen with his wife's mucus can be evaluated when the wife mucus is inserted into the capillary.

The method is characterized by its simplicity and requires inexpensive equipment. The crux of the invention is the use of an optic fiber which by its small dimensions enables the detection of optical disturbances which are effected by individual sperm cells. It was unexpectedly found that by using this simple device, it is possible to determine the optical density disturbances caused by an individual sperm cell, fact which enhance the sensitivity and accuracy of the determinations. The method enables to determine both the concentration of motile cells as well as the intensity of their motility.

Further features and advantages of the invention will be apparent from the description below.

## DESCRIPTION OF THE INVENTION.

The invention is herein described, by way of example only with reference to the accompanying drawings, wherein:

Fig.1     is a block diagram illustrating the scheme of the apparatus according to the present invention;

Fig.2     is a graph which correlates the dependency of SMI values of human semen versus the concentration of motile cells (see Example 1).

Fig.3     is a graphical longevity study carried out according to the present invention, of normal fertile male semen and of semen collected from a male whose spermatozoa possess reduced ability to maintain motility for long periods (see Example 3).

Fig.4     is a graphic representation of motility characteristics defined by SMI of semen cells after "swim-up" procedure (see Example 4).

Fig 5     is a graphic representation of motility characteristic in diluted bull.s semen (see Example 5).

Fig 6     illustrate the curves recoring the SMI values at various distances from the semen-mucus interface (see Example 6.)

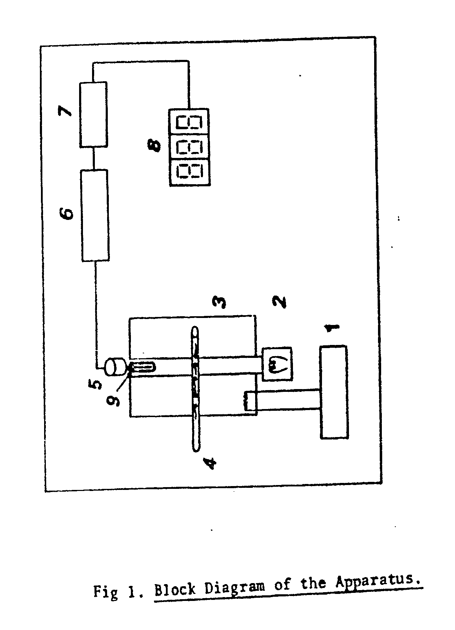

The apparatus as illustrated in Fig. 1 comprises the following parts:

- 1. Temperature control.   2. Light source.

- 3. Capillary holder.   4. Capillary.

- 5. Photoelectric cell.   6. Analog/digital convertor.

- 7. Microprocessor.   8. Digital display.

- 9. Optic fiber, having a thickness in the range of 10 to 400 microns.

The method according to the invention is very simple and requires normal equipment. A specimen sample in the range of 5 to 20ul is placed in a glass capillary, and a predeterminedfield of the sperm suspension is continuously examined to detect the variations in the optical density caused by the individual sperm cells. The signal is detected by a thin optic fiber with a thickness in the range of 10 to 400 microns, and preferably in the range of 50 to 150 microns. An amplitude-modulated analog electrical signal is generated in response to these variations in optical density and the peaks and the valleys of the amplitude-modulated electrical signal are counted over a predetermined period of time to provide the SMI value of the tested sample.

The SMI obtained by the method according to the present invention has been found to correlate closely with the concentration of motile cells in the specimen and with their mean velocity.

Although this invention has been described with respect to some of its preferred embodiments, and illustrated for some specific determination, it should be understood that many variations and modifications will now be obvious to those skilled in the art, and it is therefore preferred that the scope of the invention be limited not by the specific disclosure, examples and drawings presented herein for a better illustration of the invention, but only by the appended Claims.

**EXAMPLE 1.**

Motility measurement of human sperm.

A small aliquot of a sample from an original liquefied human semen was sucked into a thin capillary. The capillary was placed over an aperture through which light passed. Single motile spermatozoa caused disturbance in the optical density in the examined field and was detected by the optic fiber of the apparatus.

In the attached Fig. 1 there is a graph which correlates the concentration of motile sperm in a given sperm. The semen aliquot was divided into two equal volumes: one volume was heated to $60^{\circ}$ C for about 5 minutes, which killed all live cells, as verified by a microscope. Volumes from the two samples were mixed in varying ratios. In the case when the mixture contained killed cells, no SMI values beyond the background reading were recorded. As shown in the graph, the SMI values increased with increasing concentrations of motile cells (see the closed circles). Most significantly, the same specimens produced no signals at all when introduced into the device designed to measure the SMI values of fresh, undiluted animal semen (see the open circles).

**EXAMPLE 2.**

Diagnosis of deficient motility in infertile human male.

An experiment was carried out to diagnose subnormal motility characteristics in two semen samples of fertile and infertile human males.

The results are given in the following Table I. Semen taken from infertile man had a concentration of

13x10$^6$ cells/ml of which 9% were motile. The SMI values obtained by this semen sample was 22 units compared with 231 units for fertile male.

### TABLE I: Semen parameters in semen samples of fertile and infertile human males.

| Clinical status | Total concentration | % Motility | V* (um/sec) | SMI (units) |
|---|---|---|---|---|
| Fertile | 110 x10$^6$/ml | 82 | 31 | 231 |
| Infertile | 13 x10$^6$/ml | 9 | 10 | 22 |

* V= mean velocity of the spermatozoa.

### EXAMPLE 3:

Measurement of human sperm cell longevity.

Survival of motile cells can be detected quantitatively by the present invention. Semen is allowed to liquefy. Aliquots are then taken at different time periods. A steep drop in motility parameters is indicative of potentially impaired survival of cells with fertilizing capacity.

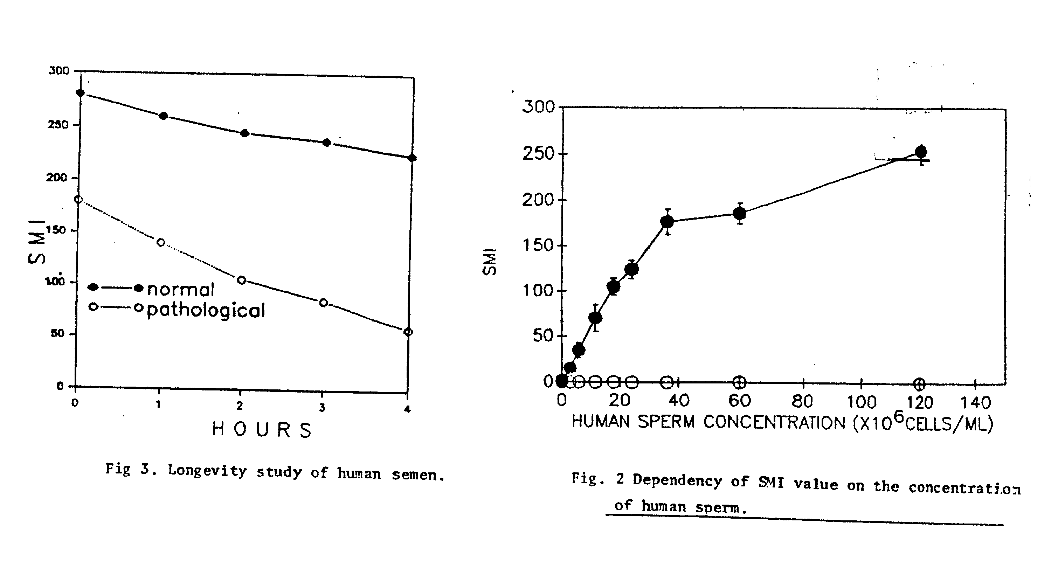

Fig. 3 demonstrates longevity study performed according to the present invention of normal fertile male semen and of semen collected from a male whose cells possess reduced survival capability.

### EXAMPLE 4:

Determination of motility characteristics in semen undergoing "swim-up" procedure.

The present invention can be useful also for the validation of the "swim-up" procedure used for the enrichment of highly motile cells.

An amount of 3 ml of semen was centrifuged. The resulted pellet was overlaid with 0.5 ml of BWW (Biggers, Whitten and Whittingham), a conventional physiological medium, and left for about 2 hours at 37° C.

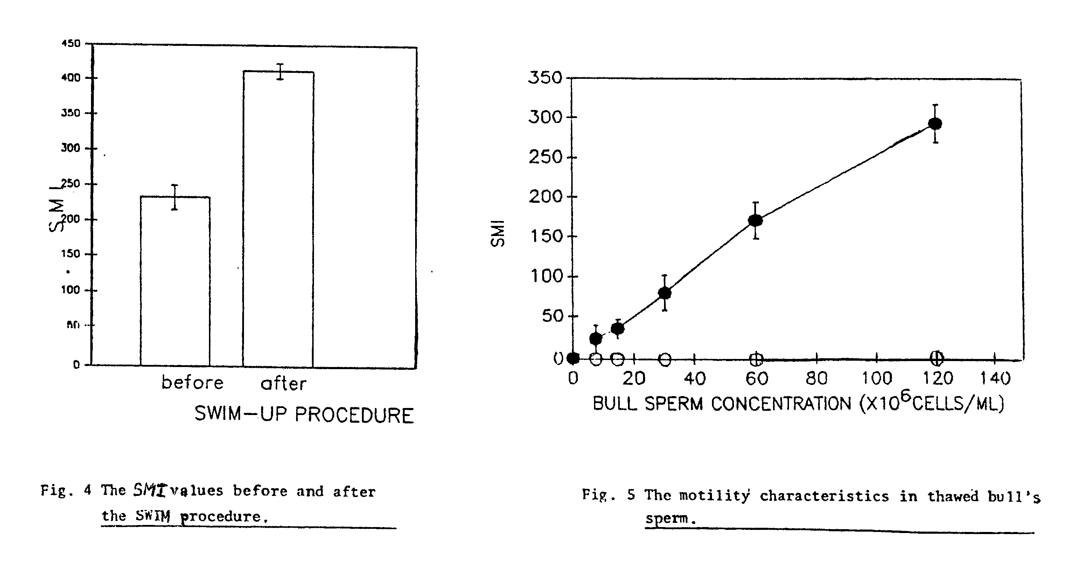

Fig.4 shows the SMI values of the original semen and of the "swim-up" fraction, demonstrating the improvement of motility characteristics imparted by the treatment.

### EXAMPLE 5:

Determination of motility characteristics in bull's semen.

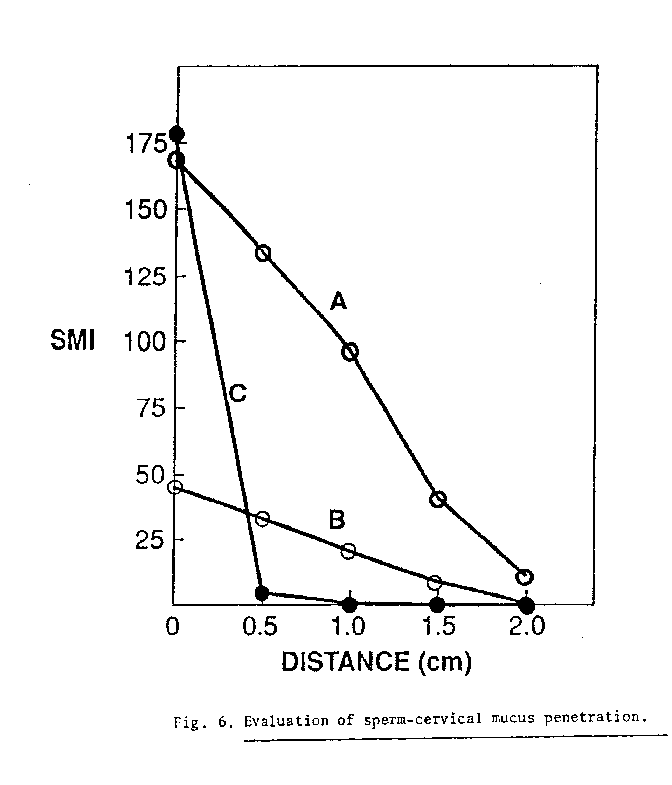

The present invention can be used for the measurement of motility characteristics in thawed semen of domestic animals such as: bulls, rams, horses, pigs, turkeys, and roosters as well as pet animals such as dogs, cats, birds and others. The capability of measuring motility characteristics in thawed bull's sperm is illustrated in the attached Figure 5.

Bull's sperm frozen in liquid nitrogen was thawed in a solution of sodium citrate (as a thawing medium) and diluted serially in 1:2 ratios. Concentration range of 0-100x10$^6$/ml can be accurately measured according to the present invention (see closed circles of Fig.5).

A comparative experiment was carried out with the same sperm, in an attempt to measure collective wave-like movement. The diluted bull's sperm was introduced into the apparatus designed to measure collective wave-like movement of fresh, undiluted domestic animal's semen. No signal was detected at this motile sperm concentration as can be noticed from the open circles (abscise of Fig.5).

### Example 6:

Evaluation of sperm-cervical mucus penetration.

Two flat glass capillaries were filled with normal cervical mucus. A third capillary was filled with cervical mucus which contains conditions which are hostile to spermatozoa (acidity, antisperm antibodies, bacterial contamination, etc) .The first capillary,containing normal cervical mucus, was immersed in fresh semen obtained from a normal male (curve A). The second capillary, containing normal mucus, was immersed in fresh semen with reduced concentration of motile cells (curve B). The third capillary, containing mucus with hostile properties, was immersed in fresh normal semen as in Curve A.

The device was made to scan the capillary at any desired spacial or temporal points and electronically record the results for the clinical assessment.

Fig. 6 demonstrates that the device, when scanning the capillaries and recording the SMI values at various defined distances from the semen-mucus interface, can clearly differentiate between mucuses compatible with sperm cells (curve A) and hostile to them (curve C).Also, the device can differentiate between the penetrating capability into mucus of semen with normal cell count (curve A), and reduced cell count (curve B).

## Claims

1. A method of measuring the motility of individual sperm cells which comprises:
   introducing the sperm cells into a transparent capillary, detecting the optical density disturbances caused by the individual sperm cells being characterized by the use of an optical fiber having a thickness in the range of 10 to 400 microns for said detection, generating an amplitude-modulated analog electrical signal and counting the peaks and valleys of said electrical signal thus providing a Sperm Motility Index (SMI).

2. The method according to Claim 1, wherein the optical fiber has a thickness in the range of 50 to 150 microns.

3. The method according to Claims 1 or 2, wherein the sperm cells concentration is in the range of between 0 to $400 \times 10^6$ cell/ml.

4. The method according to Claims 1 to 3, used for the determination of human sperm cells.

5. The method according to Claims 1 or 2, used for the determination of sperm cells of domestic animals after their dilution.

6. Thee method according to Claims 1 or 2, used for the determination of sperm cells of domestic animals after freezing and thawing.

7. The method according to Claim 6, used for motility evaluation to be applied in artificial insemination.

8. The method according to Claims 1 to 5, used for the evaluation of sperm-cervical mucus penetration.

9. The method according to Claims 1 to 4, used for the measurement of semen longevity of male semen.

10. An apparatus for measuring the motility of individual sperm cells which comprises:
    - a transparent capillary for receiving an aliquot of sperm cells whose motility is to be measured;
    - an optical fiber having a thickness in the range of 10 to 400 microns for the detection of optical density disturbances caused by the individual sperm cells and generating an amplitude-modulated analog electrical signal according to the optical density disturbances, and
    - counting means for the peaks and valleys of said electrical signal.

11. The apparatus according to Claim 10, wherein said optical fiber has a thickness in the range of 50 to 150 microns.

12. A method of measuring the motility of individual sperm cells, substantially as described and illustrated in the specification and claimed in any one of Claims 1 to 9.

13. An apparatus for measuring the motility of individual sperm cells, substantially as described in the specification and the attached drawings and claimed in any one of Claims 10 or 11.

Fig 1. Block Diagram of the Apparatus.

Fig. 2 Dependency of SMI value on the concentration of human sperm.

Fig 3. Longevity study of human semen.

Fig. 4 The $SMI$ values before and after the SWIM procedure.

Fig. 5 The motility characteristics in thawed bull's sperm.

Fig. 6. Evaluation of sperm-cervical mucus penetration.